# EUROPEAN PATENT SPECIFICATION

(11) **EP 4 120 055 B1**
(45) Date of publication and mention of the grant of the patent: **17.12.2025**
(21) Application number: 22182718.1
(22) Date of filing: 04.07.2022
(51) Int. Cl.: G06F 3/04845, G01C 21/36, G06F 3/0485, G06F 3/04883

(54) **NAVIGATION APPARATUS**
NAVIGATIONSVORRICHTUNG
APPAREIL DE NAVIGATION

(30) Priority: 13.07.2021 JP 2021115828
(43) Date of publication of application: 18.01.2023
(73) Proprietor: Alps Alpine Co., Ltd., Ota-ku, Tokyo 145-8501 (JP)
(72) Inventor: Akatsu, Hiroyuki, Tokyo (JP); Abe, Makoto, Tokyo (JP)
(74) Representative: Schmitt-Nilson Schraud Waibel Wohlfrom Patentanwälte Partnerschaft mbB

(56) References cited:
- US-A1- 2018 329 623

## Description

The present invention relates to a navigation apparatus that displays a map image of an own vehicle position and its surroundings.

Conventionally, there is known a map display system in which, when returning from the other-location display state to the current-location display state, the current location is displayed at a reference scale preset for current-location display, or a dedicated screen for a user to set the reference scale is displayed to change the reference scale (see, for example, JP 2016-57088 A). In this map display system, when an arbitrary position in the displayed map image is tapped with a finger, state transition takes place from the current-location display state to the other-location display state around the tapped position.

In recent years, an image displayed on a smartphone or a tablet terminal is commonly reduced/enlarged by pinch-in/out to reduce or widen a space between two fingers on a screen. If the reference scale can be changed by reducing/enlarging the display of the current location by pinch-in/out, this is considered as to be convenient because the user can easily realize the intended size of the display. However, the reduction/enlargement of the display of the current location by pinch-in/out has the following problems.

If one finger first touches the screen in order to change the reference scale of the current-location display by pinch-in/out, this may be determined as tapping for switching to the other-location display state. Therefore, the current-location display is changed to the other-location display, and then the other finger touches the screen to reduce/enlarge the display by pinch-in/out. Thereafter, when the current-location button or the like is pressed for returning to the current-location display, the display state returns to the display based on the reference scale before the display scale change. Therefore, it is necessary to reset the reference scale of the current-location display, which is problematic in terms of operability.

US 2018/329623 A1 discloses a touch type operation device which allows for preventing an occurrence of a situation in which processing unintended by a user is performed by the pinch-in operation on the spherical operation area of a touch sensor, and to improve usability.

An object of the present invention is to provide a navigation apparatus capable of improving operability in changing a display scale by pinch-in/out.

The invention relates to a navigation apparatus according to the appended independent claims. An embodiment is disclosed in the dependent claim.

When the display scale of the current-location window is changed by pinch-in/out, even if one finger touches the screen first, the touch is wrongly determined as a swipe operation and the map image is scrolled, the current-location scale can be updated by setting an appropriate condition as if there is no scroll associated with the swipe operation. Thus, it is possible to improve operability in changing the display scale by pinch-in/out.

The above-described predetermined condition according to a first embodiment is that the own vehicle position is included in the displayed scroll window. Even if one finger touches the screen before pinch-in/out to cause scrolling of the screen corresponding to a swipe operation, the amount of this scrolling is considered to be small. Therefore, incorrect setting of the current-location scale due to false detection of a swipe operation can be eliminated by confirming that the own vehicle position is within the scroll window.

The above-described predetermined condition according to a second embodiment is preferably that the display range (particularly, the entire display range) of the current-location window having been displayed before the swipe operation by the user overlaps the displayed scroll window. Even if one finger touches the screen before pinch-in/out to cause scrolling of the screen corresponding to a swipe operation, the amount of this scrolling is considered to be small. Therefore, incorrect setting of the current-location scale due to false detection of a swipe operation can be eliminated by confirming that the display range of the current-location window overlaps the scroll window.

Fig. 1 is a diagram illustrating a configuration of a navigation apparatus.
Fig. 2 is a diagram illustrating an embodiment of a state transition between "current-location window" display and "scroll window" display.
Fig. 3 is a flowchart illustrating an operation procedure related to a current-location scale determination operation.
Figs. 4A to 4D are diagrams illustrating the screen transition between the "current-location window" display and the "scroll window" display.

Hereinafter, a navigation apparatus according to the present invention will be described with reference to the drawings.

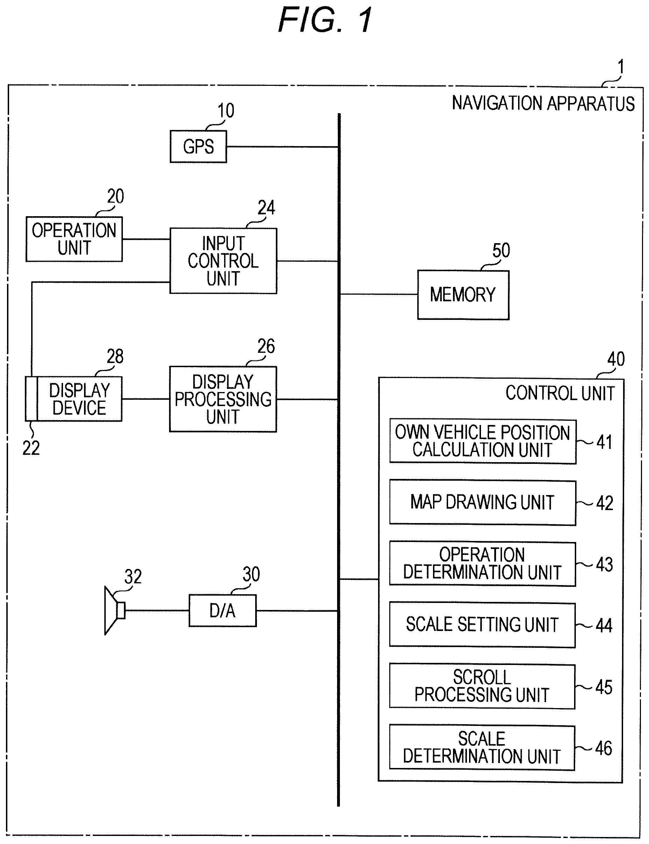

Fig. 1 is a diagram illustrating a configuration of a navigation apparatus. The navigation apparatus 1 is mounted in a vehicle for use. It is assumed to be implemented by executing a predetermined application on a mobile terminal device such as a smartphone attached to a cradle, for example.

The navigation apparatus 1 includes a GPS receiver 10, an operation unit 20, a touch panel 22, an input control unit 24, a display processing unit 26, a display device 28, a digital-analog converter (D/A) 30, a speaker 32, a control unit 40, and a memory 50.

The GPS receiver 10 receives signals transmitted from a plurality of GPS satellites, and outputs positioning data indicating the position of the own device (own vehicle position) at predetermined time intervals.

The operation unit 20 is intended to accept various operations by a user, and includes various switches, operation knobs, and the like. The touch panel 22 is arranged to overlap a screen of the display device 28, and detects a position on the screen touched by the user's finger. The input control unit 24 monitors operation states of the operation unit 20 and the touch panel 22, and detects the contents of input by the user.

The display processing unit 26 outputs video signals for displaying various operation windows, input windows, and the like to display these windows on the display device 28. The display processing unit 26 also outputs video signals for displaying a map image obtained by a navigation process, a travel route of the vehicle, and various types of information to be provided to the user to display these images and information on the display device 28. The display device 28 is formed of, for example, a liquid crystal display device (LCD).

Digital-analog converter 30 converts audio data generated by the control unit 40 into an analog audio signal and outputs the analog audio signal from the speaker 32.

The control unit 40 is configured to control the entire navigation apparatus 1, and is implemented by a CPU executing a predetermined application program stored in a ROM or a RAM. In the present embodiment, attention is mainly focused on an "own vehicle position image" display operation in which to display a map image of the own vehicle position and its surroundings and a "scroll window" display operation in which to display a map image of the position pointed by the user and its surroundings while moving the position. However, the control unit 40 performs these display operations and other navigation operations such as route search, route guidance, intersection guidance, and facility search. The memory 50 is a semiconductor memory (for example, flash memory) that stores various types of information necessary for the processing performed by the control unit 40 or obtained by the processing. The memory 50 stores map data necessary for map image display and various navigation operations. The memory 50 is not limited to a semiconductor memory, and another storage device such as a hard disk device may be used.

The control unit 40 described above also includes an own vehicle position calculation unit 41, a map drawing unit 42, an operation determination unit 43, a scale setting unit 44, a scroll processing unit 45, and a scale determination unit 46 in order to mainly perform the "own vehicle position screen" display operation or the "scroll window" display operation described above.

The own vehicle position calculation unit 41 calculates the own vehicle position using the positioning data output from the GPS receiver 10. This own vehicle position calculation may be performed in combination with another technique such as a dead reckoning sensor. In addition, the positioning accuracy may be further increased in combination with a technique such as map matching.

The map drawing unit 42 draws a map image of the own vehicle position calculated by the own vehicle position calculation unit 41 and its surroundings and a map image of the position pointed by the user and its surroundings.

The operation determination unit 43 monitors the state of contact of the user's finger on the touch panel 22 to determine the presence or absence of swiping or pinch-in/out performed by the user and the contents thereof (the amount of movement of the finger at the time of swiping, the space between two fingers at the time of pinch-in/out, and the like).

When the user performs pinch-in/out by touching the screen of the display device 28 with two fingers and narrowing or widening the space between the fingers, the scale setting unit 44 reduces/enlarges the display scale according to the operation. When the reduction/enlargement is performed on the current-location window, the display scale after the reduction/enlargement is recorded as the "current-location scale". When the reduction/enlargement is performed on the scroll window, the display scale after the reduction/enlargement is recorded as "scroll scale".

When the user performs swiping by touching the screen of the display device 28 with one finger and moving the contact position, the scroll processing unit 45 performs scroll processing of changing the range of the map image to be displayed in accordance with the movement.

When the "current-location window" display is instructed by the user during the scroll processing, the scale determination unit 46 determines whether to use the recorded "current-location scale" or to use the "scroll scale" at that time as a new "current-location scale" according to the situation at that time.

The control unit 40 corresponds to a control unit, the own vehicle position calculation unit 41 and the map drawing unit 42 correspond to a current-location window display unit, the scroll processing unit 45 and the map drawing unit 42 correspond to a scroll window display unit, the scale setting unit 44 corresponds to a scale setting unit, and the scale determination unit 46 corresponds to a scale determination unit.

Next, descriptions will be provided as to embodiments of an operation of switching between the "current-location window" display in which to display a map image of the own vehicle position and its surroundings and the "scroll window" display in which to display a map image of the position pointed by the user and its surroundings while moving the position.

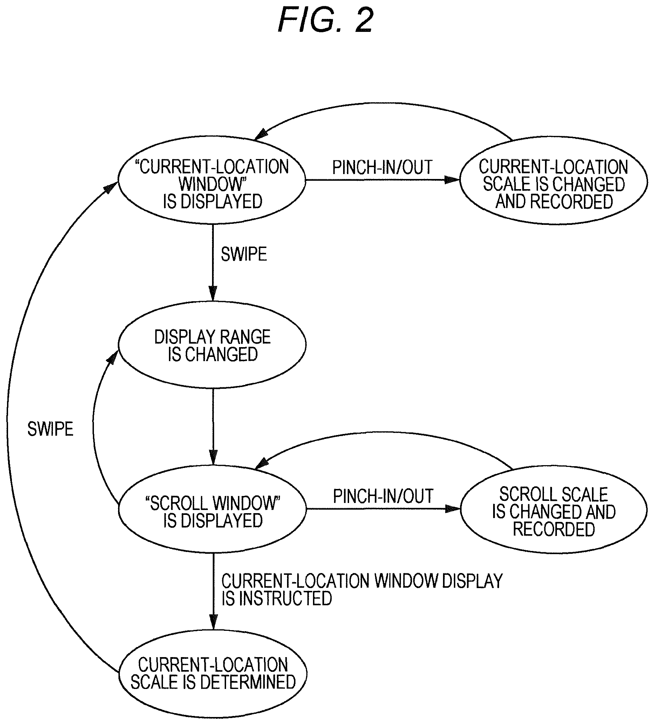

Fig. 2 is a diagram illustrating the state transition between the "current-location window" display and the "scroll window" display. The "current-location window" is displayed immediately after the power is turned on. In this window, an "own vehicle position mark" is displayed at the own vehicle position, and a map image is created at the "current-location scale" recorded at that time and displayed on the display device 28.

In this state, when the user performs pinch-in/out on the screen, the display scale is reduced/enlarged according to the operation, the changed display scale is recorded as the "current-location scale", and the "current-location window" display is maintained.

On the other hand, when the user swipes on the screen in the state of the "current-location window" display, the "scroll window" is displayed in which the display range moves based on the moving direction and moving amount of the touch position of the finger while the display scale (scroll scale) at that time is maintained. When the own vehicle position is present in the scroll window, the display of the own vehicle position mark at the position is maintained. While the swipe is continuing, the "scroll window" display is maintained while the display range is changed.

In this state, when the user performs pinch-in/out on the screen, the display scale is reduced/enlarged according to the operation, the changed display scale is recorded as a new "scroll scale", and the "scroll window" display is maintained.

When the user performs pinch-in/out in a state where the "current-location window" is displayed, if one finger quickly comes into contact with the touch panel 22, this operation may be erroneously detected as a swipe. As described above, the pinch-in/out performed on the "current-location window" display updates the current-location scale recorded at that time to a new reduced/enlarged current-location scale. However, if it is erroneously determined that the touch of one finger is a swipe, when the other finger touches the screen to start pinch-in/out, the current-location scale is updated to the scroll scale by this pinch-in/out.

Conventionally, when the display of the current-location window is instructed in this state (for example, the user issues this instruction by pointing at the "current location" button displayed on a part of the screen), the display returns to the "current-location window" display based on the current-location scale that has not been updated.

Therefore, when the display of the current-location window is instructed while the "scroll window" is displayed, it is determined whether a predetermined condition for the current location scale is satisfied.

Specifically, when the display of the current-location window is instructed on the "scroll window" display, if the own vehicle position (mark) is included in the "scroll window", it is considered that a swipe may have been erroneously detected at the time of pinch-in/out, and the scroll scale on the "scroll window" display is reset to a new current-location scale and the display shifts to the "current-location window" display. On the other hand, when the own vehicle position mark is not included in the "scroll window", it is considered that an instruction of scrolling by swiping has been issued prior to pinch-in/out, and the display shifts to the "current-location window" with the current location scale recorded at that time, without resetting the scroll scale at the time of displaying the "scroll window" to a new current-location scale.

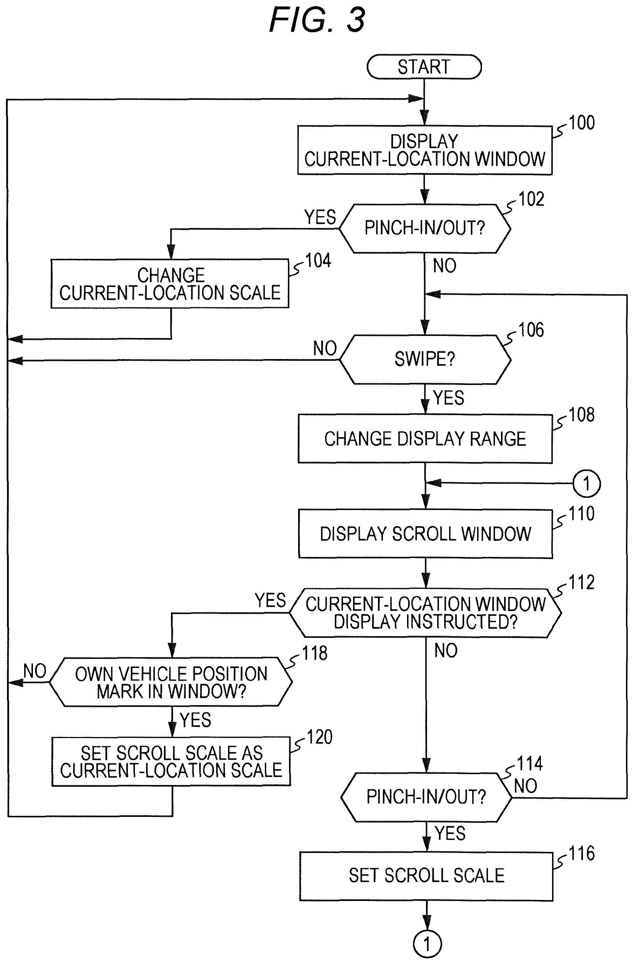

Fig. 3 is a flowchart illustrating the operation procedure related to a current-location scale determination operation. After the power is turned on, when the own vehicle position calculation unit 41 detects the own vehicle position and the map drawing unit 42 draws a map image of the own vehicle position and its surroundings (current-location window) and displays on the display device 28 (step 100), the operation determination unit 43 monitors the operation state of the user using the touch panel 22 and determines whether the user has performed pinch-in/out (step 102). When detecting pinch-in/out, the operation determination unit 43 makes an affirmative determination, and the scale setting unit 44 changes the current-location scale reflecting the pinch-in/out (step 104). Thereafter, the process returns to step 100 to continue the display of the current-location window.

When detecting no pinch-in/out, the operation determination unit 43 makes a negative determination in step 102. Next, the operation determination unit 43 determines whether the user has performed a swipe (step 106). When detecting no swipe, the operation determination unit 43 makes a negative determination, and the process returns to step 100 to continue the display of the current-location window.

When detecting a swipe, the operation determination unit 43 makes an affirmative determination in step 106. Next, the scroll processing unit 45 changes the display range in accordance with the direction and amount of the swipe (step 108), and the map drawing unit 42 makes a drawing corresponding to the changed display range and the scroll window is displayed (step 110).

Next, the operation determination unit 43 determines whether the user has issued an instruction for display of the current-location window (whether the user has pointed at the "current location" button) (step 112). When no instruction is given, the operation determination unit 43 makes a negative determination, and the operation determination unit 43 determines whether the user has performed pinch-in/out (step 114). When detecting no pinch-in/out, the operation determination unit 43 makes a negative determination, and the process returns to step 106 to repeat the operations after the swipe determination.

When pinch-in/out is detected in the state of the scroll window display, the operation determination unit 43 makes an affirmative determination in step 114. Next, the scale setting unit 44 sets the scroll scale reflecting the pinch-in/out (step 116). Thereafter, the process returns to step 110 to continue the scroll window display.

When the display of the current-location window is instructed in the state of the scroll window display, the operation determination unit 43 makes an affirmative determination in step 112. In this case, the scale determination unit 46 determines whether the own vehicle position mark is included in the displayed scroll window (step 118). When the own vehicle position mark is included, the scale determination unit 46 makes an affirmative determination, and the scale determination unit 46 sets the scroll scale at that time as a new current-location scale (step 120). Thereafter, the process returns to step 100, and the "current-location window" is displayed using the newly set current-location scale. When the own vehicle position mark is not included in the displayed scroll window, the scale determination unit 46 makes a negative determination in step 118. In this case, the current-location scale is not changed, and the "current-location window" is displayed using the current-location scale recorded before.

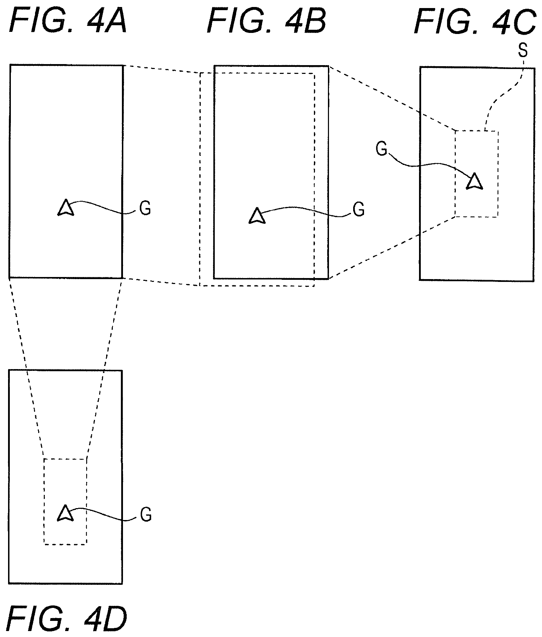

Figs. 4A to 4D are diagrams illustrating the screen transition between the "current-location window" display and the "scroll window" display. While the "current-location window" is displayed as illustrated in Fig. 4A, when the user attempts to perform pinch-in on the screen in order to change the current-location scale and one finger touches the screen first and its position is slightly shifted, the screen is scrolled corresponding to this shift (Fig. 4B). Thereafter, when the other finger touches the screen to perform pinch-in, the scroll window is reduced (Fig. 4C) and the scroll scale is changed. In this state, when the user issues an instruction to display the "current-location window", since the display screen includes the own vehicle position mark G, the scroll scale at this point of time is set to a new current location scale, and the "current-location window" is displayed (Fig. 4D). In the related art, the screen will return to the "current-location window" display illustrated in Fig. 4A.

As described above, in the navigation apparatus 1, when the display scale of the current-location window is changed by pinch-in/out, even if one finger touches the screen first, the touch is wrongly determined as a swipe operation and the map image is scrolled, the current-location scale can be updated by setting an appropriate condition as if there is no scroll associated with the swipe operation. Thus, it is possible to improve operability in changing the display scale by pinch-in/out.

The predetermined condition is that the own vehicle position is included in the displayed scroll window. Even if one finger touches the screen before pinch-in/out to cause scrolling of the screen corresponding to a swipe operation, the amount of this scrolling is considered to be small. Therefore, incorrect setting of the current-location scale due to false detection of a swipe operation can be eliminated by confirming that the own vehicle position is within the scroll window.

Note that the present invention is not limited to the above-described embodiments, and various kinds of modifications can be made within the scope of the claims. For example, in the above-described embodiment, when the own vehicle position is included in the displayed scroll window, the scroll scale is updated as a new current-location scale. However, when another condition is satisfied, the current location scale may be similarly updated.

As a predetermined condition, when the display range (preferably, the entire display range) of the current-location window having been displayed before the swipe operation by the user overlaps the displayed scroll window, the scroll scale may be updated as a new current-location scale. In the flowchart illustrated in Fig. 3, step 118 may be changed to "The scale determination unit 46 determines whether the displayed scroll window includes the display range (or the entire display range) of the current-location window before scrolling". In the transition screen illustrated in Fig. 4C, the display range of the current-location window before scrolling is indicated with S.

Even if one finger touches the screen before pinch-in/out to cause scrolling of the screen corresponding to a swipe operation, the amount of this scrolling is considered to be small. Therefore, incorrect setting of the current-location scale due to false detection of a swipe operation can be eliminated by confirming that the display range of the current-location window overlaps the scroll window.

In the above-described embodiments, a case where a portable terminal device such as a smartphone attached to a cradle is used as the navigation apparatus of the present embodiment has been described as an example. However, the present invention may be applied to a tablet terminal or a dedicated navigation apparatus that cannot be removed, such as a head unit.

As described above, according to the present invention, when the display scale of the current-location window is changed by pinch-in/out, even if one finger touches the screen first, the touch is wrongly determined as a swipe operation and the map image is scrolled, the current-location scale can be updated by setting an appropriate condition as if there is no scroll associated with the swipe operation. Thus, it is possible to improve operability in changing the display scale by pinch-in/out.

### Reference Signs List

- 1: Navigation apparatus
- 10: GPS receiver
- 22: Touch panel
- 24: Input control unit
- 26: Display processing unit
- 28: Display device
- 40: Control unit
- 41: Own vehicle position calculation unit
- 42: Map drawing unit
- 43: Operation determination unit
- 44: Scale setting unit
- 45: Scroll processing unit
- 46: Scale determination unit
- 50: Memory

## Claims

1. A navigation apparatus (1) comprising:
a display device (28) configured to display a map image on a screen;
a touch panel (22) configured to detect a touch position of a finger on the screen; and
a control unit (40) configured to execute processing related to display of the map image in response to a touch operation of the finger using the touch panel (22),
wherein
the control unit (40) includes:
a current-location window display unit configured to display a map image of an own vehicle position and its surroundings as a current location image at a current-location scale;
a scroll window display unit configured to, when swiping of the screen by a user's finger is detected using the touch panel (22), display, as a scroll window, the map image whose display range has been moved in response to the swipe operation; and
a scale setting unit (44) configured to, when pinch-in/out of the screen by the user's fingers is detected using the touch panel (22) while the current-location window or the scroll window is displayed, change the current-location scale of the current-location window displayed or the scroll scale of the scroll window in response to the pinch-in/out operation, and
a scale determination unit (46) configured to, when an instruction of the display of the current-location window is received from the user while the scroll window is displayed and a predetermined condition is satisfied, update the current-location scale by using the scroll scale, and in other cases, maintain the current-location scale, wherein the predetermined condition is that the own vehicle position is included in the displayed scroll window, and
after the scale determination unit (46) updates or maintains the current-location scale, the current-location window display unit is configured to display the current-location window.

2. A navigation apparatus (1) comprising:
a display device (28) configured to display a map image on a screen;
a touch panel (22) configured to detect a touch position of a finger on the screen; and
a control unit (40) configured to execute processing related to display of the map image in response to a touch operation of the finger using the touch panel (22),
wherein
the control unit (40) includes:
a current-location window display unit configured to display a map image of an own vehicle position and its surroundings as a current location image at a current-location scale;
a scroll window display unit configured to, when swiping of the screen by a user's finger is detected using the touch panel (22), display, as a scroll window, the map image whose display range has been moved in response to the swipe operation; and
a scale setting unit (44) configured to, when pinch-in/out of the screen by the user's fingers is detected using the touch panel (22) while the current-location window or the scroll window is displayed, change the current-location scale of the current-location window displayed or the scroll scale of the scroll window in response to the pinch-in/out operation, and
a scale determination unit (46) configured to, when an instruction of the display of the current-location window is received from the user while the scroll window is displayed and a predetermined condition is satisfied, update the current-location scale by using the scroll scale, and in other cases, maintain the current-location scale, wherein the predetermined condition is that a display range of the current-location window having been displayed before the swipe operation by the user overlaps the displayed scroll window,
after the scale determination unit (46) updates or maintains the current-location scale, the current-location window display unit is configured to display the current-location window.

3. The navigation apparatus (1) according to claim 2, wherein the predetermined condition is that the entire display range of the current-location window having been displayed before the swipe operation by the user overlaps the displayed scroll window.

## Patentansprüche

1. Navigationsvorrichtung (1), aufweisend:
eine Anzeigeeinrichtung (28), die dazu ausgelegt ist, ein Kartenbild auf einem Bildschirm anzuzeigen;
ein Touchpanel (22), das dazu ausgelegt ist, eine Berührungsposition eines Fingers auf dem Bildschirm zu detektieren; und
eine Steuereinheit (40), die dazu ausgelegt ist, eine Verarbeitung in Bezug auf das Anzeigen des Kartenbildes als Reaktion auf eine Berührungsbetätigung des Fingers unter Verwendung des Touchpanels (22) auszuführen,
wobei
die Steuereinheit (40) aufweist:
eine Anzeigeeinheit für ein Fenster für den momentanen Ort, die dazu ausgelegt ist, ein Kartenbild einer Position des eigenen Fahrzeugs und dessen Umgebung als Bild des momentanen Orts in einem Maßstab für den momentanen Ort anzuzeigen;
eine Scroll-Fenster-Anzeigeeinheit, die dazu ausgelegt ist, wenn ein Wischen über den Bildschirm durch den Finger eines Benutzers unter Verwendung des Touchpanels (22) detektiert wird, als Scroll-Fenster das Kartenbild, dessen Anzeigebereich als Reaktion auf die Wischbetätigung bewegt wurde, anzuzeigen; und
eine Maßstabeinstellungseinheit (44), die dazu ausgelegt ist, wenn ein Zusammen-/Auseinanderziehen des Bildschirms durch die Finger des Benutzers unter Verwendung des Touchpanels (22) detektiert wird, während das Fenster für den momentanen Ort oder das Scroll-Fenster angezeigt wird, den Maßstab für den momentanen Ort des angezeigten Fensters für den momentanen Ort oder den Scroll-Maßstab des Scroll-Fensters als Reaktion auf die Zusammen-/Auseinanderziehbetätigung zu ändern,
und
eine Maßstabsbestimmungseinheit (46), die dazu ausgelegt ist, wenn eine Anweisung zum Anzeigen des Fensters für den momentanen Ort von dem Benutzer empfangen wird, während das Scroll-Fenster angezeigt wird, und eine vorbestimmte Bedingung erfüllt ist, den Maßstab für den momentanen Ort unter Verwendung des Scroll-Maßstabs zu aktualisieren und in anderen Fällen den Maßstab für den momentanen Ort beizubehalten, wobei die vorbestimmte Bedingung ist, dass die Position des eigenen Fahrzeugs in dem angezeigten Scroll-Fenster enthalten ist, und,
die Anzeigeeinheit für das Fenster für den momentanen Ort dazu ausgelegt ist, das Fenster für den momentanen Ort anzuzeigen, nachdem die Maßstabsbestimmungseinheit (46) den Maßstab für den momentanen Ort aktualisiert oder beibehält.

2. Navigationsvorrichtung (1), aufweisend:
eine Anzeigeeinrichtung (28), die dazu ausgelegt ist, ein Kartenbild auf einem Bildschirm anzuzeigen;
ein Touchpanel (22), das dazu ausgelegt ist, eine Berührungsposition eines Fingers auf dem Bildschirm zu detektieren; und
eine Steuereinheit (40), die dazu ausgelegt ist, eine Verarbeitung in Bezug auf das Anzeigen des Kartenbildes als Reaktion auf eine Berührungsbetätigung des Fingers unter Verwendung des Touchpanels (22) auszuführen,
wobei
die Steuereinheit (40) aufweist:
eine Anzeigeeinheit für ein Fenster für den momentanen Ort, die dazu ausgelegt ist, ein Kartenbild einer Position des eigenen Fahrzeugs und dessen Umgebung als Bild des momentanen Orts in einem Maßstab für den momentanen Ort anzuzeigen;
eine Scroll-Fenster-Anzeigeeinheit, die dazu ausgelegt ist, wenn ein Wischen über den Bildschirm durch den Finger eines Benutzers unter Verwendung des Touchpanels (22) detektiert wird, als Scroll-Fenster das Kartenbild, dessen Anzeigebereich als Reaktion auf die Wischbetätigung bewegt wurde, anzuzeigen; und
eine Maßstabeinstellungseinheit (44), die dazu ausgelegt ist, wenn ein Zusammen-/Auseinanderziehen des Bildschirms durch die Finger des Benutzers unter Verwendung des Touchpanels (22) detektiert wird, während das Fenster für den momentanen Ort oder das Scroll-Fenster angezeigt wird, den Maßstab für den momentanen Ort des angezeigten Fensters für den momentanen Ort oder den Scroll-Maßstab des Scroll-Fensters als Reaktion auf die Zusammen-/Auseinanderziehbetätigung zu ändern,
und
eine Maßstabsbestimmungseinheit (46), die dazu ausgelegt ist, wenn eine Anweisung zum Anzeigen des Fensters für den momentanen Ort von dem Benutzer empfangen wird, während das Scroll-Fenster angezeigt wird, und eine vorbestimmte Bedingung erfüllt ist, den Maßstab für den momentanen Ort unter Verwendung des Scroll-Maßstabs zu aktualisieren und in anderen Fällen den Maßstab für den momentanen Ort beizubehalten, wobei die vorbestimmte Bedingung ist, dass ein Anzeigebereich des Fensters für den momentanen Ort, das vor der Wischbetätigung durch den Benutzer angezeigt wurde, das angezeigte Scroll-Fenster überlappt,
die Anzeigeeinheit für das Fenster für den momentanen Ort dazu ausgelegt ist, das Fenster für den momentanen Ort anzuzeigen, nachdem die Maßstabsbestimmungseinheit (46) den Maßstab für den momentanen Ort aktualisiert oder beibehält.

3. Navigationsvorrichtung (1) nach Anspruch 2, wobei die vorbestimmte Bedingung ist, dass der gesamte Anzeigebereich des Fensters für den momentanen Ort, das vor der Wischbetätigung durch den Benutzer angezeigt wurde, das angezeigte Scroll-Fenster überlappt.

## Revendications

1. Un appareil de navigation (1) comprenant :
un dispositif d'affichage (28) configuré pour afficher une image de carte sur un écran;
un panneau tactile (22) configuré pour détecter une position de toucher d'un doigt sur l'écran; et
une unité de contrôle (40) configurée pour exécuter un traitement lié à l'affichage de l'image de carte en réponse à une opération de toucher du doigt utilisant le panneau tactile (22),
où
l'unité de contrôle (40) comprend :
une unité d'affichage de fenêtre de localisation actuelle configurée pour afficher une image de carte de la position de son propre véhicule et de ses environs comme une image de localisation actuelle à une échelle de localisation actuelle ;
une unité d'affichage de fenêtre de défilement configurée pour, lorsque le glissement de l'écran par le doigt d'un utilisateur est détecté en utilisant le panneau tactile (22), afficher, comme une fenêtre de défilement, l'image de carte dont la plage d'affichage a été déplacée en réponse à l'opération de glissement ; et
une unité de réglage de l'échelle (44) configurée pour, lorsque le pincement/dépinçage de l'écran par les doigts de l'utilisateur est détecté en utilisant le panneau tactile (22) tandis que la fenêtre de localisation actuelle ou la fenêtre de défilement est affichée, changer l'échelle de localisation actuelle de la fenêtre de localisation actuelle affichée ou l'échelle de défilement de la fenêtre de défilement en réponse à l'opération de pincement/dépinçage ; et
une unité de détermination de l'échelle (46) configurée pour, lorsqu'une instruction de l'affichage de la fenêtre de localisation actuelle est reçue de l'utilisateur pendant que la fenêtre de défilement est affichée et qu'une condition prédéterminée est satisfaite, mettre à jour l'échelle de localisation actuelle en utilisant l'échelle de défilement, et dans d'autres cas, maintenir l'échelle de localisation actuelle, où la condition prédéterminée est que la position de son propre véhicule est incluse dans la fenêtre de défilement affichée, et
après que l'unité de détermination de l'échelle (46) a mis à jour ou maintenu l'échelle de localisation actuelle, l'unité d'affichage de fenêtre de localisation actuelle est configurée pour afficher la fenêtre de localisation actuelle.

2. Un appareil de navigation (1) comprenant :
un dispositif d'affichage (28) configuré pour afficher une image de carte sur un écran;
un panneau tactile (22) configuré pour détecter une position de toucher d'un doigt sur l'écran; et
une unité de contrôle (40) configurée pour exécuter un traitement lié à l'affichage de l'image de carte en réponse à une opération de toucher du doigt utilisant le panneau tactile (22),
où
l'unité de contrôle (40) comprend :
une unité d'affichage de fenêtre de localisation actuelle configurée pour afficher une image de carte de la position de son propre véhicule et de ses environs comme une image de localisation actuelle à une échelle de localisation actuelle ;
une unité d'affichage de fenêtre de défilement configurée pour, lorsque le glissement de l'écran par le doigt d'un utilisateur est détecté en utilisant le panneau tactile (22), afficher, comme une fenêtre de défilement, l'image de carte dont la plage d'affichage a été déplacée en réponse à l'opération de glissement ; et
une unité de réglage de l'échelle (44) configurée pour, lorsque le pincement/dépinçage de l'écran par les doigts de l'utilisateur est détecté en utilisant le panneau tactile (22) tandis que la fenêtre de localisation actuelle ou la fenêtre de défilement est affichée, changer l'échelle de localisation actuelle de la fenêtre de localisation actuelle affichée ou l'échelle de défilement de la fenêtre de défilement en réponse à l'opération de pincement/dépinçage,
et
une unité de détermination de l'échelle (46) configurée pour, lorsqu'une instruction de l'affichage de la fenêtre de localisation actuelle est reçue de l'utilisateur pendant que la fenêtre de défilement est affichée et qu'une condition prédéterminée est satisfaite, mettre à jour l'échelle de localisation actuelle en utilisant l'échelle de défilement, et dans d'autres cas, maintenir l'échelle de localisation actuelle, où la condition prédéterminée est que la plage d'affichage de la fenêtre de localisation actuelle affichée avant l'opération de glissement par l'utilisateur chevauche la fenêtre de défilement affichée,
après que l'unité de détermination de l'échelle (46) a mis à jour ou maintenu l'échelle de localisation actuelle, l'unité d'affichage de la fenêtre de localisation actuelle est configurée pour afficher la fenêtre de localisation actuelle.

3. L'appareil de navigation (1) selon la revendication 2, où la condition prédéterminée est que l'intégralité de la plage d'affichage de la fenêtre de localisation actuelle affichée avant l'opération de glissement par l'utilisateur chevauche la fenêtre de défilement affichée.
